# EUROPÄISCHE PATENTSCHRIFT

(11) **EP 2 520 452 B1**
(45) Veröffentlichungstag und Bekanntmachung des Hinweises auf die Patenterteilung: **23.05.2018**
(21) Anmeldenummer: 12000796.8
(22) Anmeldetag: 08.02.2012
(51) Int. Cl.: B60K 11/00

(54) **Aktive Kühlung elektrischer Antriebskomponenten**
Active cooling of electrical drive components
Refroidissement actif de composants d'entraînement électriques

(30) Priorität: 06.05.2011 DE 102011100685
(43) Veröffentlichungstag der Anmeldung: 07.11.2012
(73) Patentinhaber: MAN Truck & Bus AG, 80995 München (DE)
(72) Erfinder: Welfers, Hans-Josef, Dr., 41844 Wegberg (DE)
(74) Vertreter: v. Bezold & Partner Patentanwälte - PartG mbB

(56) Entgegenhaltungen:
- EP-A2- 1 266 779
- US-A- 5 641 016

## Beschreibung

Die Erfindung betrifft ein Kühlsystem für einen Fahrzeugantrieb, wie z.B. einen Hybrid- oder Elektrofahrzeugantrieb .

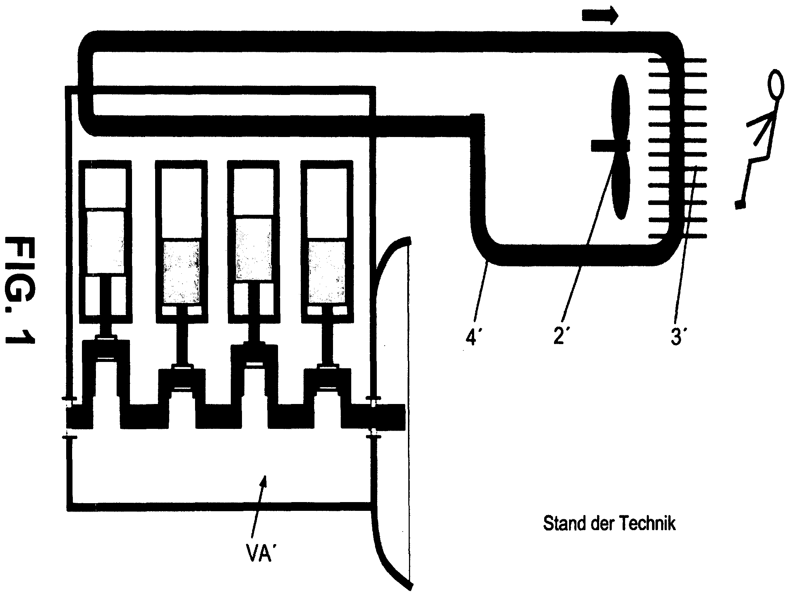

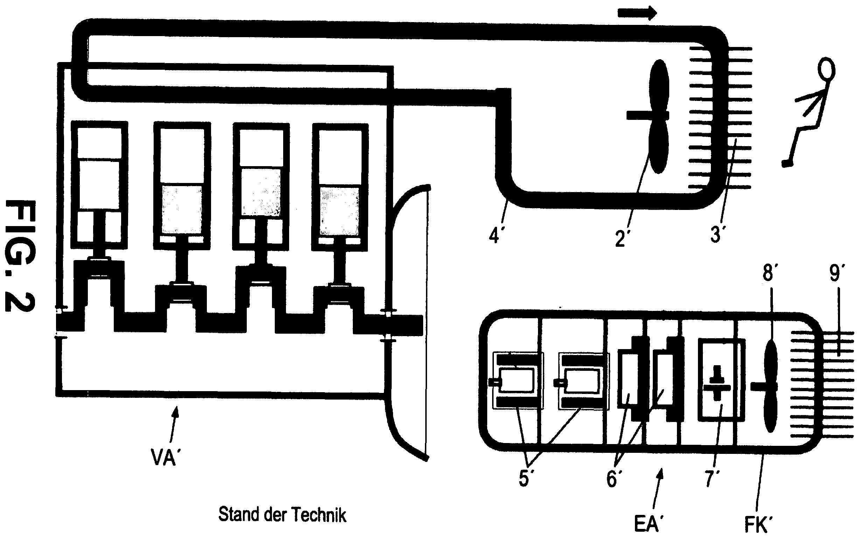

Die Kühlung konventioneller Fahrzeugantriebe mit einem Verbrennungsmotor als Antriebseinheit ist normalerweise als Wasser- oder Luftkühlung ausgeführt. Die Abwärme des Motors wird über Wärmetauscher nach außen abgeführt und/oder zur Innenraumbeheizung verwendet. Figur 1 zeigt schematisch eine Ausführung eines Kühlkreises 4' in Form einer Wasserkühlung für eine verbrennungsmotorische Antriebseinheit VA' (z.B. ein Verbrennungsmotor) mit Ventilator/Lüfter 2' und Wärmetauscher 3'. Die im Kühlkreislauf notwendigen Wasser- bzw. Umwälzpumpen sind hier und in allen nachfolgenden Funktionsschemata der Einfachheit halber weggelassen. Für den im Hinblick auf Energieverbrauch und Verschleiß optimalen Betrieb der verbrennungsmotorischen Antriebseinheit VA' liegt die Kühlmitteltemperatur normalerweise im Temperaturbereich zwischen ca. 60 °C und ca. 120 °C. Gegenüber der Außentemperatur ist die Temperatur im Kühlkreis 4' der verbrennungsmotorischen Antriebseinheit VA' deutlich höher, so dass einerseits eine zuverlässige Wärmeabfuhr bei hohen, z.B. tropischen Außentemperaturen sicher gestellt ist und andererseits z.B. im Winter eine effektive Innenraumbeheizung möglich ist. EP1266799 A offenbart ein Kühlsystem gemäß dem Oberbegriff des Anspruchs 1. Unter Bezugnahme auf das in Figur 2 gezeigte Funktionsschema werden bei sogenannten alternativen Antrieben (z.B. Hybrid- oder Elektroantriebe) mit weiteren Antriebseinheiten wie z.B. einer elektromotorischen Antriebseinheit EA', die insbesondere eine Elektromaschine 5', Umrichter 6' und Energiespeicher 7' (z.B. Batterie, Supercaps, etc.) umfasst, heute oft einfache Luftkühlungen als passive Lösung (meist nur Kühlrippen) oder als aktive Lösung mit Lüfter 8' eingesetzt. Darüber hinaus werden im Hochleistungsbetrieb auch Kühlkreise FK' mit Flüssigkeitskühlungen für die elektrischen Funktionselemente eingesetzt. Die Verlustwärme in solchen Kühlkreisen FK' wird dann mittels Lüfter 8' und Wärmetauscher 9' vorzugsweise nach außen abgeführt. Eine herkömmliche Anbindung an den Kühlkreis 4' der verbrennungsmotorischen Antriebseinheit VA' erfolgt in der Regel nicht, insbesondere weil das Temperaturniveau dort zu hoch ist und dies zu einer erheblich größeren Dimensionierung der elektrischen Funktionselemente führen würde.

Während eine verbrennungsmotorische Antriebseinheit (z.B. der Verbrennungsmotor) relativ hohe Kühlmitteltemperaturen für einen optimalen Betrieb benötigt, ist es bei den elektrischen Komponenten, die meist einer elektromotorischen Antriebseinheit zugeordnet sind, völlig anders. Sie benötigen möglichst niedrige Temperaturen für einen optimalen Betrieb und/oder für eine kompakte Auslegung.

So haben z.B. Elektromaschinen Magnete und Kupferwicklungen, deren Verluste mit steigenden Temperaturen zunehmen. Darüber hinaus ist die maximale Temperatur durch die Temperaturfestigkeit der Lackisolation und der Entmagnetisierung deutlich begrenzt. Je niedriger die Temperatur in der Wicklung und in den Magneten gehalten werden kann, umso niedriger sind die Verlustleistungen und umso kleiner bzw. kompakter kann die Elektromaschine ausgelegt werden.

Umrichter z.B. verwenden hochbelastete Halbleiter (z.B. MOSFETs, IGBTs), die auch bei nur kurzzeitiger Überhitzung (Sperrschichttemperatur > ca. 175°C) irreversibel zerstört werden. Je niedriger die Temperatur in den Leistungshalbleitern gehalten werden kann, umso niedriger sind die Verluste und umso weniger Halbleiter werden für die Steuerungsaufgabe notwenig. Dies beeinflusst so nicht nur die Größe der Umrichter, sondern auch die Kosten.

Energiespeicher z.B. sind im Verhalten unterschiedlich je nach Technologie. Aber alle haben normalerweise die gleiche Eigenschaft, dass niedrigere Temperaturen von Vorteil sind im Hinblick auf Wirkungsgrad und Lebensdauer.

Die Anforderungen an die Kühltemperatur sind also bei konventionellen Antrieben mit verbrennungsmotorischer Antriebseinheit deutlich anders als bei alternativen Antrieben mit elektrischen Leistungskomponenten.

Darüber hinaus sind insbesondere bei alternativen Antrieben die Verlustleistungen der Antriebseinheiten nicht ausreichend, um damit auch im Winter den Innenraum eines Fahrzeugs zufriedenstellend zu beheizen. Deshalb wären selbst die relativ kleinen Verlustleistungen der elektromotorischen Antriebseinheiten für die Beheizung bzw. Temperierung des Innenraums des Fahrzeugs hilfreich. Die Integration der beiden ist aber wegen der unterschiedlichen Temperaturanforderungen schwierig und aufwendig.

Die sich aus vorstehend Genanntem ergebenden Aufgaben können insbesondere mit den Merkmalen des unabhängigen Anspruchs der vorliegenden Erfindung gelöst werden. Die Erfindung ist jedoch nicht auf Ausführungsformen beschränkt, die sämtliche eingangs genannten Probleme oder Nachteile des Standes der Technik beseitigen. Vielmehr beansprucht die Erfindung auch allgemein Schutz für die nachstehend beschriebenen Ausführungsbeispiele.

Erfindungsgemäß wird ein Kühlsystem für einen Fahrzeugantrieb eines Fahrzeugs gemäß den Merkmalen des Anspruchs 1 bereitgestellt, insbesondere für einen Hybrid- oder Elektrofahrzeugantrieb und andere alternative Fahrzeugantriebe.

Das Kühlsystem umfasst einen Kühlkreis z.B. zum vorzugsweise aktiven Kühlen zumindest einer Elektrokomponente des Fahrzeugs und zumindest einen Funktionskreis z.B. zum Kühlen einer verbrennungsmotorischen Antriebseinheit des Fahrzeugs. Alternativ oder ergänzend umfasst das Kühlsystem einen Funktionskreis z.B. zum Innenraumtemperieren, insbesondere Innenraumbeheizen bzw. Beheizen des Innenraums des Fahrzeugs. Die vorstehend genannten Funktionskreise können z.B. verschiedene Funktionskreise sein oder als ein Funktionskreis ausgebildet sein. Der Kühlkreis und der Funktionskreis zum Kühlen zumindest einer Elektrokomponente und/oder zum Innenraumtemperieren energetisch miteinander verbunden bzw. aneinandergekoppelt sind, mittels einer Wärmepumpe. Die Wärmepumpe kann z.B. gemäß dem Verdichter-Prinzip funktionieren oder gemäß anderen vorzugsweise aktiven Kühlprinzipien, wie beispielsweise einer Absorptionskühlung, einer Kühlung mittels Peltier-Elementen, etc., oder anderen geeigneten Prinzipien oder Verfahren. Ein Vorteil der Erfindung ist es, dass auf eine Luftkühlung der zumindest einen Elektrokomponente verzichtet werden kann, jedoch nicht zwangsläufig muss. Eine Luftkühlung ist relativ leistungsschwach und insbesondere für hohe Temperaturen sehr aufwendig und wartungsintensiv. Die zumindest eine Elektrokomponente z.B. in Form einer oder mehrerer Elektromaschinen kann kompakter und kostengünstiger ausgebildet werden, wodurch beispielsweise neue Package-Konzepte denkbar sind. Ebenso kann die zumindest eine Elektrokomponente z.B. in Form eines elektronischen Umrichters kompakter und mit weniger Halbleitern und somit kostengünstiger ausgebildet werden. Ferner ist eine verbesserte Innenraumbeheizung des Fahrzeugs auch bei wirkungsgradoptimierten alternativen Antrieben (zu wenig Abwärme) möglich.

Es ist möglich, dass der Kühlkreis zweckmäßig ein Niedrigtemperatur-Kühlkreis ist und/oder der Funktionskreis zweckmäßig ein Hochtemperatur-Funktionskreis ist. Das heißt, im Betrieb ist die Temperatur des Kühlmittels des Kühlkreises niedriger als die Temperatur des Kühlmittels des Funktionskreises.

Insbesondere kann der Kühlkreis zum Kühlen zumindest einer Elektrokomponente ein Niedrigtemperatur-Kühlkreis sein oder einen solchen umfassen.

Ferner kann der Funktionskreis zum Kühlen der verbrennungsmotorischen Antriebseinheit ein Hochtemperatur-Kühlkreis sein oder einen solchen umfassen. Außerdem kann der Funktionskreis zum Innenraumtemperieren ein Heiz- und/oder Kühlkreis sein oder einen solchen umfassen. Besonders bevorzugt ist, dass der Funktionskreis zum Innenraumtemperieren ein Heizkreis zum Beheizen des Innenraums des Fahrzeugs ist.

Der Funktionskreis ist vorzugsweise ein kühlmittelbasierter Funktionskreis. Die Temperatur des Kühlmittels des Funktionskreises beträgt im Betrieb vorzugsweise zwischen ca. 60°C und ca. 120°C. Das Kühlmittel ist vorzugsweise eine Flüssigkeit.

Der Kühlkreis ist vorzugsweise ein kühlmittelbasierter Kühlkreis. Die Temperatur des Kühlmittels des Kühlkreises ist im Betrieb vorzugsweise ungefähr ca. 30°C bis ca. 60°C niedriger als die Temperatur des Kühlmittels des Funktionskreises. Das Kühlmittel ist vorzugsweise eine Flüssigkeit mit guten Wärmeübertragungseigenschaften.

Vorzugsweise sind der Kühlkreis und der Funktionskreis so miteinander verbunden, dass Wärme aus dem Kühlkreis in den Funktionskreis einspeisbar ist und/oder Verlustwärme der zumindest einen Elektrokomponente in den Funktionskreis einspeisbar ist, z.B. zum Innenraumbeheizen des Fahrzeugs.

Vorzugsweise ist die zumindest eine Elektrokomponente eine Verlustwärme erzeugende Elektrokomponente.

Es ist möglich, dass die zumindest eine Elektrokomponente mindestens eine elektromotorische Antriebseinheit, mindestens eine vorzugsweise generatorisch und/oder motorisch betreibbare Elektromaschine, mindestens einen elektronischen Umrichter, mindestens einen elektrischen Energiespeicher (z.B. eine Batterie, Supercaps, etc.), Leistungselektronik und/oder eine Motorsteuerung umfasst oder derart ausgebildet ist. Die zumindest eine Elektrokomponente umfasst vorzugsweise eine oder mehrere der der elektromotorischen Antriebseinheit zugeordneten insbesondere elektrischen bzw. elektronischen Funktionselemente.

Vorzugsweise umfasst der Kühlkreis einen Verdichter, eine Drossel, einen Verdampfer, einen Kondensator und/oder einen Kompressor.

Es ist möglich, dass der Antrieb des Verdichters mittels einer Elektromaschine erfolgt, die z.B. über zumindest einen elektronischen Umrichter vorzugsweise aus einem Bordnetz oder aus einem elektrischen Energiespeicher mit Energie versorgt wird. Alternativ oder ergänzend ist es möglich, dass der Antrieb des Verdichters mittels der verbrennungsmotorischen Antriebseinheit erfolgt.

Vorzugsweise ist zumindest eine Funktionseinheit mit dem Funktionskreis z.B. mittels einer Wärmepumpe und/oder einer Wärmetauscheinrichtung so verbunden, dass von der Funktionseinheit erzeugte und/oder gespeicherte Wärme (Hitze oder Kälte) und/oder Verlustwärme der Funktionseinheit in den Funktionskreis einspeisbar ist, insbesondere zum Innenraumbeheizen des Fahrzeugs.

Es ist möglich, dass die zumindest eine Funktionseinheit eine Zusatzheizung und/oder einen Wärmespeicher umfasst oder als solche(r) ausgebildet ist.

Es ist möglich, dass zumindest zwei der Folgenden in einer Einheit und/oder einem Gehäuse integriert sind: Die Zusatzheizung, der Wärmespeicher, die Wärmetauscheinrichtung und/oder die Wärmepumpe.

Vorzugsweise ist die Wärmepumpe konfiguriert, um der Umgebungs- bzw. Außenluft Wärme (Hitze oder Kälte) zu entziehen, insbesondere zum Innenraumtemperieren, vorzugsweise zum Innenraumbeheizen. Dabei kann es sich um die Wärmepumpe zwischen dem Kühlkreis und dem Funktionskreis handeln. Es kann aber auch eine weitere Wärmepumpe zu diesem Zweck vorgesehen werden, z.B. die Wärmepumpe zwischen dem Funktionskreis und dem Funktionselement.

Die Erfindung umfasst auch einen Fahrzeugantrieb, insbesondere einen Hybrid- oder Elektrofahrzeugantrieb und andere alternative Fahrzeugantriebe, mit einem Kühlsystem wie hierin beschrieben. Ferner umfasst die Erfindung ein Fahrzeug, insbesondere ein Hybrid- oder Elektrofahrzeug und andere alternative Fahrzeuge, mit einem solchen Fahrzeugantrieb bzw. einem Kühlsystem wie hierin beschrieben. Der Fahrzeugantrieb umfasst vorzugsweise eine verbrennungsmotorische Antriebseinheit und/oder eine elektromotorische Antriebseinheit. Die elektromotorische Antriebseinheit umfasst vorzugsweise zumindest eine generatorisch und/oder motorisch betreibbare Elektromaschine.

Die zumindest eine Elektrokomponente umfasst im Rahmen der Erfindung insbesondere elektronische und/oder elektrische Komponenten.

Die oben beschriebenen Merkmale und bevorzugten Ausführungsbeispiele der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele in Verbindung mit den beigefügten Figuren.
- Figur 1: zeigt ein Funktionsschema eines Kühlsystems und einer verbrennungsmotorischen Antriebseinheit gemäß Stand der Technik,
- Figur 2: zeigt ein Funktionsschema eines Kühlsystems einer verbrennungsmotorischen Antriebseinheit und eines separaten Kühlsystems einer elektromotorischen Antriebseinheit gemäß Stand der Technik,
- Figur 3: zeigt ein Funktionsschema eines Kühlsystems, einer verbrennungsmotorischen Antriebseinheit und einer elektromotorischen Antriebseinheit gemäß einer Ausführungsform der Erfindung, und
- Figur 4: zeigt ein Funktionsschema eines Kühlsystems und einer elektromotorischen Antriebseinheit gemäß einer anderen Ausführungsform der Erfindung.

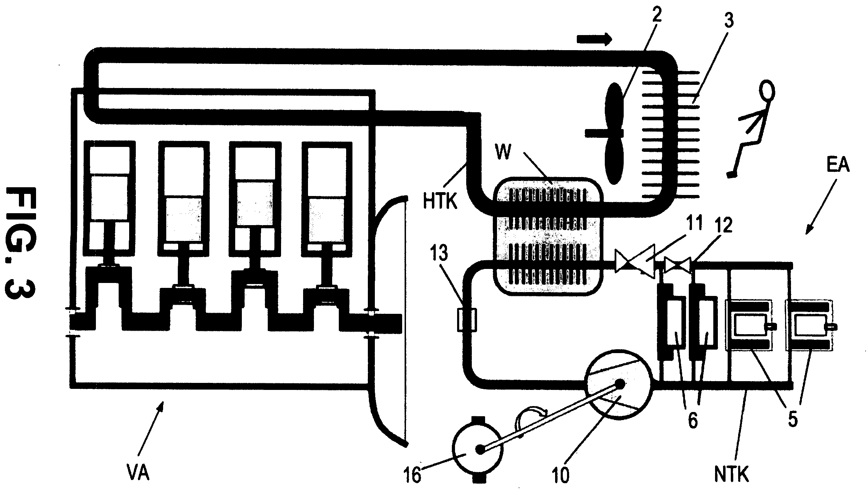

Figur 3 zeigt ein beispielhaftes erfindungsgemäßes Kühlsystem für einen Hybridfahrzeugantrieb. Der Hybridfahrzeugantrieb umfasst eine verbrennungsmotorische Antriebseinheit VA und eine elektromotorische Antriebseinheit EA. Das Kühlsystem umfasst einen Kühlkreis NTK zum Kühlen zumindest einer Elektrokomponente, die der elektromotorischen Antriebseinheit EA zugeordnet ist, oder allgemein zum Kühlen der elektromotorischen Antriebseinheit EA. Die zumindest eine Elektrokomponente umfasst mindestens eine Elektromaschine 5 und mindestens einen elektronischen Umrichter 6, kann aber auch mindestens einen elektrischen Energiespeicher (z.B. eine Batterie), Leistungselektronik, eine Motorsteuerung (ECU: Engine Control Unit) und andere elektronische/elektrische Funktionselemente umfassen. Der Kühlkreis NTK ist als Niedrigtemperatur-Kühlkreis ausgebildet. Bezugszeichen 2 kennzeichnet einen Lüfter oder Ventilator, während Bezugszeichen 3 einen Wärmetauscher bezüglich des Innenraums des Fahrzeugs kennzeichnet.

Das Kühlsystem umfasst ferner einen Funktionskreis HTK, der insbesondere als Hochtemperatur-Kühlkreis zum Kühlen der verbrennungsmotorischen Antriebseinheit VA und zum Innenraumtemperieren-/beheizen des Fahrzeugs ausgebildet ist.

Der Kühlkreis NTK und der Funktionskreis HTK sind mittels einer Wärmepumpe W energetisch miteinander verbunden, um Wärme aus dem Kühlkreis NTK in den Funktionskreis HTK einzuspeisen, insbesondere um Verlustwärme der Elektrokomponenten 5, 6 in den Funktionskreis HTK einzuspeisen und z.B. zum Beheizen des Innenraums des Fahrzeugs zu nutzen.

Der Kühlkreis NTK umfasst ferner einen Verdichter 10, eine Drossel 11, einen Verdampfer 12 und einen Kondensator 13. Der Antrieb des Verdichters 10 erfolgt mittels einer Elektromaschine 16, die über zumindest einen elektronischen Umrichter aus dem Bordnetz oder aus einem elektrischen Energiespeicher des Fahrzeugs energetisch versorgt wird. Alternativ oder ergänzend kann der Antrieb des Verdichters 10 mittels der verbrennungsmotorischen Antriebseinheit VA erfolgen.

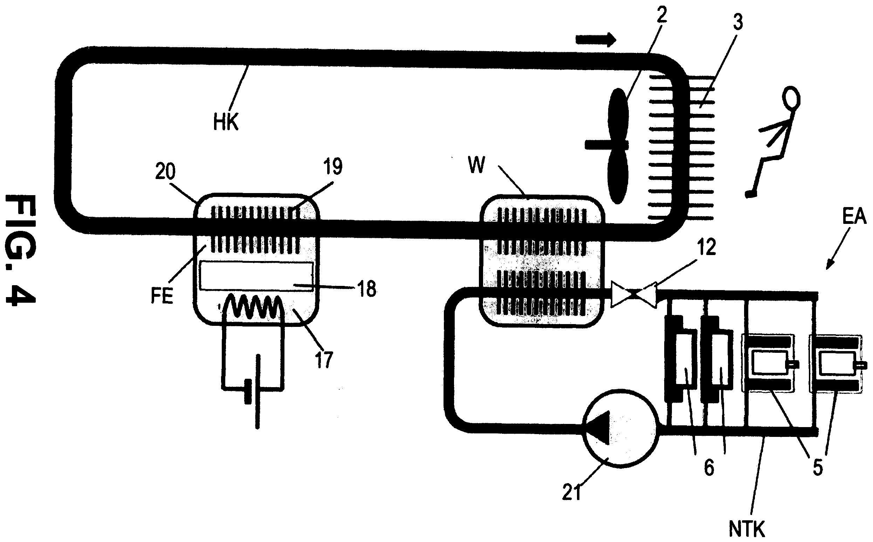

Figur 4 zeigt ein beispielhaftes erfindungsgemäßes Kühlsystem für einen reinen Elektrofahrzeugantrieb. Die Ausführungsform gemäß Figur 4 stimmt teilweise mit der vorstehend beschriebenen Ausführungsform überein, wobei ähnliche oder identische Teile bzw. Komponenten mit dem gleichen Bezugszeichen versehen sind, und zu deren Erläuterungen auch auf die Beschreibung der vorstehend beschriebenen Ausführungsform verwiesen wird, um Wiederholungen zu vermeiden.

Insbesondere bei reinen Elektrofahrzeugen sind für die Innenraumbeheizung des Fahrzeugs möglichst viele, vorzugsweise alle, auch noch so geringen Verlustleistungen bzw. Verlustwärmen zusammenzuführen und vorteilhaft auf ein Temperaturniveau zu bringen, wodurch insbesondere eine wirkungsvolle Innenraumbeheizung erzielbar wird.

Das in Figur 4 gezeigte Kühlsystem umfasst einen Kühlkreis NTK zum Kühlen zumindest einer Elektrokomponente 5, 6. Der Kühlkreis NTK ist als Niedrigtemperatur-Kühlkreis ausgebildet. Die zumindest eine Elektrokomponente 5, 6 kann wiederum mindestens eine Elektromaschine 5, mindestens einen elektronischen Umrichter 6, mindestens einen elektrischen Energiespeicher, Leistungselektronik, eine Motorsteuerung (ECU: Engine Control Unit) und andere elektronische/elektrische Funktionselemente umfassen. Der Kühlkreis NTK umfasst ferner einen Verdampfer 12 und einen Kompressor 21 (< ca. 2 KW).

Das in Figur 4 gezeigte Kühlsystem umfasst ferner einen als Heiz-/Kühlkreis HK ausgebildeten Funktionskreis zum Innenraumtemperieren eines Fahrzeugs. Der Funktionskreis HK ist vorzugsweise ein Heizkreis zum Innenraumbeheizen des Fahrzeugs. Der Kühlkreis NTK ist ein Niedrigtemperatur-Kühlkreis, während der Funktionskreis HK ein Hochtemperatur-Funktionskreis ist. Folglich ist im Betrieb die Temperatur des Kühlmittels des Funktionskreises HK höher als die Temperatur des Kühlmittels des Kühlkreises NTK.

Der Kühlkreis NTK und der Funktionskreis HK sind mittels einer Wärmepumpe W miteinander verbunden, um Wärme aus dem Kühlkreis NTK in den Funktionskreis HTK einzuspeisen, insbesondere um Verlustwärme der Elektrokomponenten 5, 6 in den Funktionskreis HK einzuspeisen.

Wie in Figur 4 zu sehen, ist eine Funktionseinheit FE mit dem Funktionskreis HK mittels einer Wärmetauscheinrichtung 19 oder gegebenenfalls mittels einer Wärmepumpe verbunden, um von der Funktionseinheit FE aktiv erzeugte oder gespeicherte Wärme in den Funktionskreis HK einzuspeisen und/oder um von der Funktionseinheit FE erzeugte Verlustwärme in den Funktionskreis HK einzuspeisen und zum Innenraumbeheizen des Fahrzeugs zu nutzen.

Die Funktionseinheit FE umfasst z.B. eine Zusatzheizung 17 und einen Wärmespeicher 18. Die Zusatzheizung 17, der Wärmespeicher 18 und der Wärmetauscher bzw. die Wärmepumpe 19 sind in einem einzigen Gehäuse 20 integriert.

Die in den Figuren 3 und 4 gezeigte Wärmepumpe W und die in Figur 4 gegebenenfalls als Wärmepumpe 19 ausgebildete Komponente können konfiguriert sein, um der Umgebungsluft Wärme zu entziehen, insbesondere zum Innenraumtemperieren des Fahrzeugs.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Ferner beansprucht die Erfindung auch Schutz für den Gegenstand und die Merkmale der Unteransprüche unabhängig von den Merkmalen der in Bezug genommen Ansprüche.

## Patentansprüche

1. Kühlsystem für einen Fahrzeugantrieb, insbesondere für einen Hybrid- oder Elektrofahrzeugantrieb, mit
- einem Kühlkreis (NTK) zum Kühlen zumindest einer Elektrokomponente (5, 6) des Fahrzeugs,
- zumindest einem Funktionskreis (HTK, HK) zum Kühlen einer verbrennungsmotorischen Antriebseinheit (VA) des Fahrzeugs und/oder zum Innenraumtemperieren des Fahrzeugs,
**dadurch gekennzeichnet, dass**
- der Kühlkreis (NTK) und der zumindest eine Funktionskreis (HTK, HK) mittels einer Wärmepumpe (W) miteinander verbunden sind.

2. Kühlsystem nach Anspruch 1, wobei
der Kühlkreis (NTK) ein Niedrigtemperatur-Kühlkreis ist und der Funktionskreis (HTK, HK) ein Hochtemperatur-Funktionskreis ist.

3. Kühlsystem nach Anspruch 1 oder 2, wobei
- der Kühlkreis (NTK) ein Niedrigtemperatur-Kühlkreis ist,
- der Funktionskreis zum Kühlen der verbrennungsmotorischen Antriebseinheit (VA) ein Hochtemperatur-Kühlkreis (HTK) ist, und/oder
- der Funktionskreis zum Innenraumtemperieren ein Heiz-/Kühlkreis (HK) ist.

4. Kühlsystem nach einem der vorhergehenden Ansprüche, wobei
- der Kühlkreis (NTK) und der Funktionskreis (HTK, HK) miteinander verbunden sind, um Wärme aus dem Kühlkreis (NTK) in den Funktionskreis (HTK, HK) einzuspeisen, und/oder
- der Kühlkreis (NTK) und der Funktionskreis (HTK, HK) miteinander verbunden sind, um Verlustwärme der zumindest einen Elektrokomponente (5, 6) in den Funktionskreis (HTK, HK) einzuspeisen.

5. Kühlsystem nach einem der vorhergehenden Ansprüche, wobei die zumindest eine Elektrokomponente (5, 6) zumindest eines von Folgenden umfasst oder ist:
- eine elektromotorische Antriebseinheit (EA) und/oder zumindest eine der elektromotorischen Antriebseinheit (EA) zugeordnete Funktionskomponente,
- mindestens eine generatorisch und/oder motorisch betreibbare Elektromaschine,
- mindestens einen elektronischen Umrichter,
- mindestens einen elektrischen Energiespeicher,
- Leistungselektronik und/oder eine Motorsteuerung (ECU).

6. Kühlsystem nach einem der vorhergehenden Ansprüche, wobei der Kühlkreis (NTK) zumindest eines von Folgenden umfasst:
- einen Verdichter (10),
- eine Drossel (11),
- einen Verdampfer (12),
- einen Kondensator (13),
- einen Kompressor (21).

7. Kühlsystem nach Anspruch 6, wobei der Antrieb des Verdichters (10)
- mittels einer Elektromaschine (16) erfolgt, die über zumindest einen Umrichter aus einem Bordnetz oder aus einem elektrischen Energiespeicher versorgt wird, oder
- mittels der verbrennungsmotorischen Antriebseinheit (VA) erfolgt.

8. Kühlsystem nach einem der vorhergehenden Ansprüche, wobei zumindest eine Funktionseinheit (FE) mit dem Funktionskreis (HTK, HK) vorzugsweise mittels einer Wärmepumpe und/oder einer Wärmetauscheinrichtung (19) verbunden ist, um von der Funktionseinheit (FE) erzeugte oder gespeicherte Wärme und/oder Verlustwärme der Funktionseinheit (FE) in den Funktionskreis (HTK, HK) einzuspeisen, insbesondere zum Innenraumbeheizen des Fahrzeugs.

9. Kühlsystem nach Anspruch 8, wobei
die Funktionseinheit (FE) eine Zusatzheizung (17) und/oder eine Wärmespeichereinrichtung (18) umfasst oder ist.

10. Kühlsystem nach Anspruch 9, wobei zumindest zwei der Folgenden in einer Einheit, insbesondere einem Gehäuse (20) integriert sind:
- die Zusatzheizung (17),
- der Wärmespeicher (18),
- die Wärmetauscheinrichtung und/oder die Wärmepumpe (19).

11. Kühlsystem nach einem der vorhergehenden Ansprüche, wobei die Wärmepumpe (W, 19) konfiguriert ist, um der Umgebungsluft Wärme zu entziehen, insbesondere zum Innenraumbeheizen und/oder zum Einspeisen in den Funktionskreis (HTK, HK).

12. Fahrzeugantrieb, insbesondere Hybrid- oder Elektrofahrzeugantrieb, mit einem Kühlsystem nach einem der vorhergehenden Ansprüche.

13. Fahrzeug, insbesondere Hybrid- oder Elektrofahrzeug, mit einem Fahrzeugantrieb nach Anspruch 12.

## Claims

1. Cooling system for a vehicle drive, in particular for a hybrid or electric vehicle drive, having
- a cooling circuit (NTK) for cooling at least one electrical component (5, 6) of the vehicle,
- at least one functional circuit (HTK, HK) for cooling an internal combustion engine drive unit (VA) of the vehicle and/or for controlling the temperature of the interior of the vehicle,
**characterized in that**
- the cooling circuit (NTK) and the at least one functional circuit (HTK, HK) are connected to one another by means of a heat pump (W).

2. Cooling system according to Claim 1, wherein
the cooling circuit (NTK) is a low-temperature cooling circuit and the functional circuit (HTK, HK) is a high-temperature functional circuit.

3. Cooling system according to Claim 1 or 2, wherein
- the cooling circuit (NTK) is a low-temperature cooling circuit,
- the functional circuit for cooling the internal combustion engine drive unit (VA) is a high-temperature cooling circuit (HTK), and/or
- the functional circuit for controlling the temperature of the interior is a heating/cooling circuit (HK).

4. Cooling system according to one of the preceding claims, wherein
- the cooling circuit (NTK) and the functional circuit (HTK, HK) are connected to one another in order to feed heat from the cooling circuit (NTK) to the functional circuit (HTK, HK), and/or
- the cooling circuit (NTK) and the functional circuit (HTK, HK) are connected to one another in order to feed lost heat from the at least one electrical component (5, 6) to the functional circuit (HTK, HK).

5. Cooling system according to one of the preceding claims, wherein the at least one electrical component (5, 6) comprises or is at least one of the following:
- an electromotive drive unit (EA) and/or at least one functional component which is associated with the electromotive drive unit (EA),
- at least one electrical machine which can be operated as a generator and/or as a motor,
- at least one electronic converter,
- at least one electrical energy storage means,
- power electronics and/or an engine control unit (ECU) .

6. Cooling system according to one of the preceding claims, wherein the cooling circuit (NTK) comprises at least one of the following:
- a compressor (10),
- a restrictor (11),
- an evaporator (12),
- a condenser (13),
- a compressor (21).

7. Cooling system according to Claim 6, wherein the compressor (10) is driven
- by means of an electrical machine (16) which is supplied with power from an on-board electrical system or from an electrical energy storage means via at least one converter, or
- by means of the internal combustion engine drive unit (VA).

8. Cooling system according to one of the preceding claims, wherein at least one functional unit (FE) is connected to the functional circuit (HTK, HK), preferably by means of a heat pump and/or a heat exchange device (19), in order to feed heat which is generated or stored by the functional unit (FE) and/or heat lost from the functional unit (FE) to the functional circuit (HTK, HK), in particular for heating the interior of the vehicle.

9. Cooling system according to Claim 8, wherein
the functional unit (FE) comprises or is an auxiliary heating means (17) and/or a heat storage means (18).

10. Cooling system according to Claim 9, wherein at least two of the following are integrated in a unit, in particular a housing (20):
- the auxiliary heating means (17),
- the heat storage means (18),
- the heat exchange device and/or the heat pump (19) .

11. Cooling system according to one of the preceding claims, wherein the heat pump (W, 19) is designed to draw heat from the ambient air, in particular for the purpose of interior heating and/or in order to be fed to the functional circuit (HTK, HK).

12. Vehicle drive, in particular hybrid or electric vehicle drive, having a cooling system according to one of the preceding claims.

13. Vehicle, in particular hybrid or electric vehicle, having a vehicle drive according to Claim 12.

## Revendications

1. Système de refroidissement pour un entraînement de véhicule, en particulier pour un entraînement de véhicule hybride ou électrique, avec
- un circuit de refroidissement (NTK) pour le refroidissement d'au moins un composant électrique (5, 6) du véhicule,
- au moins un circuit fonctionnel (HTK, HK) pour le refroidissement d'une unité d'entraînement par moteur à combustion interne (VA) du véhicule et/ou pour l'équilibrage de la température de l'espace intérieur du véhicule,
**caractérisé en ce que**
- le circuit de refroidissement (NTK) et ledit au moins un circuit fonctionnel (HTK, HK) sont raccordés l'un à l'autre au moyen d'une pompe à chaleur (W).

2. Système de refroidissement selon la revendication 1, dans lequel le circuit de refroidissement (NTK) est un circuit de refroidissement à basse température et le circuit fonctionnel (HTK, HK) est un circuit fonctionnel à haute température.

3. Système de refroidissement selon la revendication 1 ou 2, dans lequel
- le circuit de refroidissement (NTK) est un circuit de refroidissement à basse température,
- le circuit fonctionnel pour le refroidissement de l'unité d'entraînement par moteur à combustion interne (VA) est un circuit de refroidissement à haute température (HTK), et/ou
- le circuit fonctionnel pour l'équilibrage de la température de l'espace intérieur est un circuit de chauffage/refroidissement (HK).

4. Système de refroidissement selon l'une quelconque des revendications précédentes, dans lequel
- le circuit de refroidissement (NTK) et le circuit fonctionnel (HTK, HK) sont raccordés l'un à l'autre, afin de fournir de la chaleur du circuit de refroidissement (NTK) au circuit fonctionnel (HTK, HK), et/ou
- le circuit de refroidissement (NTK) et le circuit fonctionnel (HTK, HK) sont raccordés l'un à l'autre, afin de fournir au circuit fonctionnel (HTK, HK) de la chaleur perdue dudit au moins un composant électrique (5, 6).

5. Système de refroidissement selon l'une quelconque des revendications précédentes, dans lequel ledit au moins un composant électrique (5, 6) comprend ou est au moins un des composants suivants:
- une unité d'entraînement par moteur électrique (EA) et/ou au moins un composant fonctionnel associé à l'unité d'entraînement par moteur électrique (EA),
- au moins une machine électrique pouvant fonctionner en générateur et/ou en moteur,
- au moins un onduleur électronique,
- au moins un accumulateur d'énergie électrique,
- une électronique de puissance et/ou une commande de moteur (ECU).

6. Système de refroidissement selon l'une quelconque des revendications précédentes, dans lequel le circuit de refroidissement (NTK) comprend au moins un des composants suivants:
- un compresseur (10),
- un étrangleur (11),
- un évaporateur (12),
- un condenseur (13),
- un compresseur (21).

7. Système de refroidissement selon la revendication 6, dans lequel l'entraînement du compresseur (10)
- est assuré au moyen d'une machine électrique (16), qui est alimentée par au moins un onduleur à partir d'un réseau de bord ou à partir d'un accumulateur d'énergie électrique, ou
- est assuré au moyen de l'unité d'entraînement par moteur à combustion interne (VA).

8. Système de refroidissement selon l'une quelconque des revendications précédentes, dans lequel au moins une unité fonctionnelle (FE) est raccordée au circuit fonctionnel (HTK, HK) de préférence au moyen d'une pompe à chaleur et/ou d'un dispositif d'échange de chaleur (19), afin de fournir au circuit fonctionnel (HTK, HK) de la chaleur produite ou accumulée par l'unité fonctionnelle (FE) et/ou de la chaleur perdue de l'unité fonctionnelle (FE), en particulier pour le chauffage de l'espace intérieur du véhicule.

9. Système de refroidissement selon la revendication 8, dans lequel l'unité fonctionnelle (FE) comprend ou est un chauffage additionnel (17) et/ou un dispositif d'accumulation de chaleur (18).

10. Système de refroidissement selon la revendication 9, dans lequel au moins deux des composants suivants sont intégrés dans une unité, en particulier dans une enceinte (20):
- le chauffage additionnel (17),
- l'accumulateur de chaleur (18),
- le dispositif d'échange de chaleur et/ou la pompe à chaleur (19).

11. Système de refroidissement selon l'une quelconque des revendications précédentes, dans lequel la pompe à chaleur (W, 19) est configurée de façon à extraire de la chaleur de l'air ambiant, en particulier pour le chauffage de l'espace intérieur et/ou pour la fourniture au circuit fonctionnel (HTK, HK).

12. Entraînement de véhicule, en particulier entraînement de véhicule hybride ou électrique, doté d'un système de refroidissement selon l'une quelconque des revendications précédentes.

13. Véhicule, en particulier véhicule hybride ou électrique, doté d'un entraînement de véhicule selon la revendication 12.
